# EUROPÄISCHE PATENTSCHRIFT

(11) **EP 0 884 830 B1**
(45) Veröffentlichungstag und Bekanntmachung des Hinweises auf die Patenterteilung: **02.10.2002**
(21) Anmeldenummer: 98201889.7
(22) Anmeldetag: 08.06.1998
(51) Int. Cl.: H02M 3/338, H02M 3/337

(54) **Leistungsversorgungseinheit mit einem pulsdauermodulierten Wechselrichter, insbesondere für einen Röntgengenerator**
Power supply unit with a pulse width modulated inverter, in particular for an X-ray generator
Unité d'alimentation de puissance avec un onduleur modulé en largeur d'impulsion, en particulier pour un générateur de rayons X

(30) Priorität: 12.06.1997 DE 19724931
(43) Veröffentlichungstag der Anmeldung: 16.12.1998
(73) Patentinhaber: Philips Corporate Intellectual Property GmbH, 20099 Hamburg (DE); Koninklijke Philips Electronics N.V., 5621 BA Eindhoven (NL)
(72) Erfinder: van der Broeck, Heinz, Dr.-Ing., Habsburgerallee 11, 52064 Aachen (DE); Wagner, Bernhard, Habsburgerallee 11, 52064 Aachen (DE); Rexhausen, Wolfgang, Habsburgerallee 11, 52064 Aachen (DE); Geerkens, Norbert, Habsburgerallee 11, 52064 Aachen (DE)
(74) Vertreter: Hartmann, Heinrich, Dipl.-Ing.

(56) Entgegenhaltungen:
- US-A- 5 546 294
- US-A- 5 719 759

## Beschreibung

Die Erfindung betrifft eine Leistungsversorgungseinheit, die in einem ersten Betriebsmodus eine hohe Kurzzeit-Leistung und in einem zweiten Betriebsmodus eine niedrigere Dauerleistung erzeugt, mit einem eingangsseitig an eine Gleichspannungsquelle angeschlossenen Wechselrichter, an dessen Ausgang zusammen mit einem Kondensator eine Primärwicklung eines Transformators angeschlossen ist, von dem eine Sekundärwicklung mit einer Gleichrichteranordnung gekoppelt ist. Außerdem betrifft die Erfindung die Anwendung einer solchen Leistungsversorgungseinheit in einem Röntgengenerator sowie ein Röntgensystem mit einem solchen Röntgengenerator.

Ein Röntgengenerator mit einer solchen Leistungsversorgungseinheit ist aus der Anmeldung US Serial No. 08/413058 (PHD 94-044) bzw. US57 19759 bekannt. Der Wechselrichter wird mit einer konstanten Frequenz betrieben, die der aus der Kapazität des Kondensators und der Streuinduktivität der Primärwicklung resultierenden Serienresonanzfrequenz entspricht. Bei Röntgenaufnahmen (mit einer hohen Kurzzeit-Leistung) befindet sich die Leistungsversorgungseinheit in dem ersten Betriebszustand und bei einer Röntgendurchleuchtung (mit einer niedrigen Dauerleistung - d.h. einer kontinuierlich erzeugten niedrigen Leistung) im zweiten Betriebszustand. Die Röntgenaufnahmen können in gewissen zeitlichen Intervallen wiederholt werden, wobei der erreichbare zeitliche Mittelwert wesentlich höher ist als die im zweiten Betriebszustand erreichbare Dauerleistung. Diese Dauerleistung wird durch die thermische Belastbarkeit des Transformators und der in dem Wechselrichter verwendeten Schaltelemente begrenzt.

Es ist Aufgabe der vorliegenden Erfindung, die im zweiten Betriebszustand erzielbare Dauerleistung zu erhöhen. Diese Aufgabe wird bei einer Leistungsversorgungseinheit der eingangs genannten Art erfindungsgemäß dadurch gelöst, daß Mittel zum Umschalten zwischen dem ersten Betriebsmodus und dem zweiten Betriebsmodus vorgesehen sind, wobei am Ausgang des Wechselrichters im ersten Betriebsmodus eine Serienschaltung aus der Primärwicklung und dem Kondensator und im zweiten Betriebsmodus eine Serienschaltung wirksam ist, die in Serie zu der Primärwicklung und dem Kondensator eine Induktivität umfaßt.

Die Erfindung beruht auf folgenden Überlegungen:
Neben der Streuinduktivität ist noch eine weitere parasitäre Größe des Transformators zu beachten, nämlich die Wicklungskapazität der Sekundärseite des Transformators. Im ersten Betriebszustand sind für das Betriebsverhalten der Leistungsversorgungseinheit im wesentlichen die Streuinduktivität des Transformators und die Kapazität des dazu in Serie liegenden Kondensators entscheidend. Die parasitäre Wicklungskapazität wird dabei nur ganz kurz wirksam, wenn sie bei einem Nulldurchgang des Stromes durch die Primärwicklung umgeladen wird. Im zweiten Betriebszustand dauert der Umladevorgang aufgrund der dann wesentlich niedrigeren Ströme in der Primärwicklung des Transformators wesentlich länger, so daß während einer größeren Zeitspanne die Reihenschaltung der Streuinduktivität des Kondensators und der auf die Primärseite übertragenen Wicklungskapazität wirksam wird. Da die auf die Primärwicklung übertragene Wicklungskapazität meist viel kleiner ist als die Kapazität des in Serie zu der Primärwicklung liegenden Kondensators werden durch den Schaltbetrieb Oberschwingungen (Harmonische) des Stromes durch die Primärwicklung angeregt, die zu unerwünschten Stromspitzen führen und im Transformator und im Wechselrichter zusätzliche Verluste verursachen und somit zu einer erheblichen Verschlechterung des Wirkungsgrades beitragen.

Durch die im zweiten Betriebszustand in Serie zu der Primärwicklung und dem Kondensator wirksame Induktivität wird der Strom durch die Primärwicklung verringert. Dadurch verringern sich die Verluste in den Schaltern des Wechselrichters und im Transformator. Die Induktivität schränkt zwar die maximal mögliche Leistungsübertragung ein, doch ist dies unerheblich, weil im zweiten Betriebszustand (Durchleuchtung) nicht mehr als etwa 5 % der im ersten Betriebsmodus erreichbaren Spitzenleistung benötigt wird. Da die erwähnte Induktivität nur im zweiten Betriebsmodus wirksam ist, wirkt sie sich auf den ersten Betriebsmodus nicht aus.

Darüberhinaus wird im zweiten Betriebsmodus die Resonanzfrequenz durch das Wirksamwerden der Induktivität (im Vergleich zu einer Einheit ohne eine solche Induktivität) reduziert, so daß auch die durch den Schaltbetrieb des Wechselrichters hervorgerufenen Harmonischen reduziert werden. Dies führt zu einer Verringerung der Blindleistung und damit ebenfalls zu einer Verringerung der Verluste im Transformatorkern, in den Transformatorwicklungen und in den Schaltern des Wechselrichters.

Die Mittel zum Umschalten zwischen den beiden Betriebsmoden können gemäß Anspruch 2 realisiert werden. Dabei ist die Induktivität im ersten Betriebsmodus durch die Schalteranordnung kurzgeschlossen und somit unwirksam. Nachteilig ist, daß die in der Schalteranordnung enthaltenen Schalter für den maximalen Strom im ersten Betriebsmodus ausgelegt sein müssen.

Insofern ist die im Anspruch 3 angegebene Ausgestaltung günstiger, weil die darin zusätzlich (gegenüber dem üblichen Wechselrichter-Design) vorgesehen Hilfsschalter den im ersten Betriebszustand fließenden Strom allenfalls zu einem Bruchteil führen müssen.

Es sei an dieser Stelle erwähnt, daß aus der EP-A 0 756 370 bereits eine Leistungsversorgungseinheit bekannt ist mit zwei Hilfszweigen, wobei der Verbindungspunkt jedes der Hilfszweige über je eine Induktivität mit je einem der beiden Ausgangsanschlüsse des Wechselrichters verbunden sind. Diese Hilfszweige haben eine ganz andere Funktion als bei der Erfindung. Über diese Hilfszweige wird bei niedrigen Leistungen den Schaltern des Wechselrichters ein zusätzlicher Blindstrom zugeführt, wodurch erreicht werden soll, daß diese Schalter, zu denen Snubber-Kondensatoren parallell liegen, geschaltet werden können, wenn die Spannung über ihnen im wesentlichen Null ist. Durch die Erfindung wird demgegenüber der Strom im Lastkreis verringert.

Das Deaktivieren des ersten Wechselrichterzweiges im zweiten Betriebsmodus bei der Lösung nach Anspruch 3 wirft allerdings neue Probleme auf. Wenn nämlich die Schalter des ersten Hilfszweiges deaktiviert sind, wirken immer noch die diesen Schaltern parallelgeschalteten Freilaufdioden. Wenn der Strom durch die Primärwicklung im zweiten Betriebsmodus über eine der Freilaufdioden (und nicht über die Induktivität) fließt, wird die Wirkung der Induktivität im zweiten Betriebsmodus mindestens zu einem Teil unterdrückt.

Es muß daher darauf geachtet werden, daß der Strom durch die Freilaufdioden im zweiten Betriebsmodus so kurz wie möglich ist. Dies wird durch die Ausgestaltungen nach Anspruch 4 und/oder Anspruch 5 erreicht. Bei der Lösung nach Anspruch 4 wird bei richtiger Auslegung der Kapazität des weiteren Kondensators der Stromfluß über die Freilaufdioden minimiert, während nach Anspruch 5 ein etwaiger Strom in den Freilaufdioden des ersten Wechselrichterzweiges in kürzester Zeit abgebaut wird.

Die parasitären Kapazitäten des ersten Wechselrichterzweiges können - wenn im zweiten Betriebsmodus der erste Wechselrichterzweig deaktiviert ist - hochfrequente Störungen (im MHz-Bereich) hervorrufen. Diese Störungen können durch die Ausgestaltung nach Anspruch 6 unterdrückt werden.

Im ersten Betriebsmodus sind der erste und der zweite Wechselrichterzweig wirksam. Der Hilfszweig könnte dann deaktiviert werden. Vorzugsweise wird er jedoch gemäß Anspruch 7 betrieben, wodurch die die Hochspannung nicht beeinflußt wird und der Strom in der Induktivität näherungsweise Null ist, da an ihr keine Spannung wirksam wird.

Durch die Ausgestaltung nach Anspruch 8 läßt sich der Einschaltstrom des ersten Wechselrichterzweiges im ersten Betriebsmodus reduzieren.

Ein bevorzugtes Einsatzgebiet der Erfindung ist in Anspruch 9 angegeben. Ein Röntgengenerator muß einerseits in der Lage sein, für Röntgenaufnahmen hohe Kurzzeitleistungen (z.B. 100 kW für mehrere100 ms) vorzusehen und andererseits für Röntgendurchleuchtungen Dauerleistungen, die bei der Verwendung von die Röntgenstrahlung stark schwächenden Filtern mehrere kW betragen können. Gemäß Anspruch 10 kann ein solcher Röntgengenerator Teil eines Röntgensystems (mit einem oder mehreren Röntgenuntersuchungsgeräten einer oder mehreren Röntgenröhren und wenigstens einem Bildwandler) sein.

Die Erfindung wird nachstehend anhand der Zeichnungen näher erläutert. Es zeigen:
- Fig. 1: eine erste Ausführungsform der Erfindung,
- Fig. 2a: den zeitlichen Verlauf des Potentials an den Ausgangsanschlüssen des Wechselrichters im ersten Betriebsmodus,
- Fig. 2b: den daraus resultierenden zeitlichen Verlauf von Strom und Spannung am Ausgang des Wechselrichters,
- Fig. 3: den zeitlichen Verlauf von Strom und Spannung am Ausgang des Wechselrichters, der sich bei niedrigen Ausgangsleistungen ohne die erfindungsgemäßen Maßnahmen ergeben würde,
- Fig. 4a: den zeitlichen Verlauf des Potentials an einem Ausgangsanschluß des Wechselrichters bzw. am Verbindungspunkt des Hilfszweiges,
- Fig. 4b: die daraus resultierenden zeitlichen Verläufe von Strom und Spannung
- Fig. 5: eine zweite Ausführungsform der Erfindung.

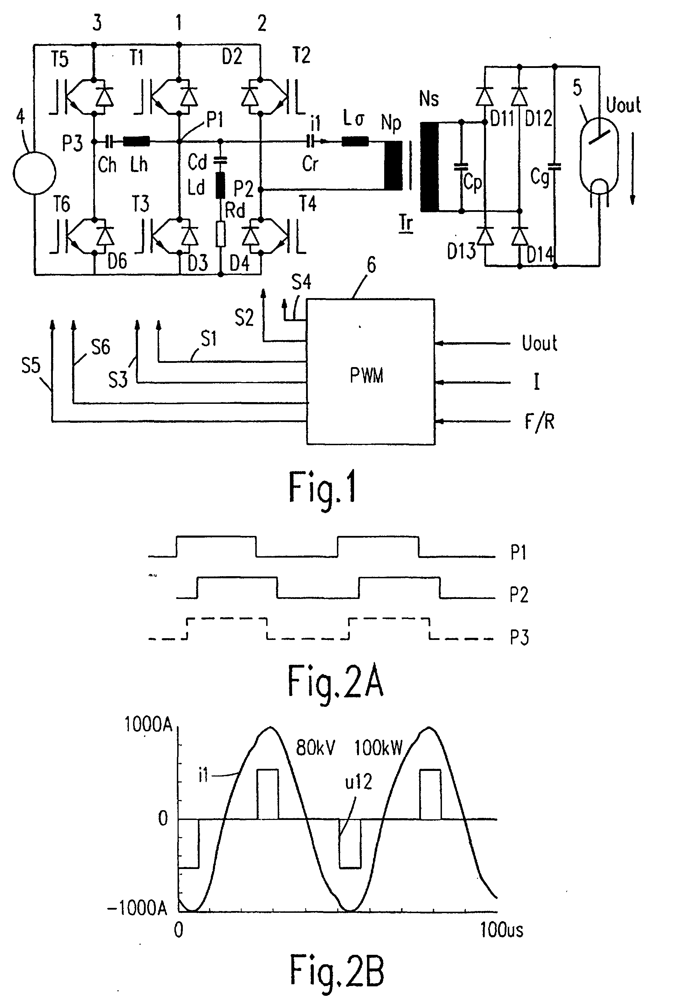

Fig. 1 zeigt ein Schaltbild des für die Erfindung relevanten Teils eines Röntgengenerators. Die Leistungsversorgungseinheit dieses Röntgengenerators weist einen Wechselrichter auf mit einem ersten Wechselrichterzweig 1 und einem zweiten Wechselrichterzweig 2. Jeder Wechselrichterzweig besteht aus der Serienschaltung zweier Schalter, z.B. Schalttransistoren T1 und T3 bzw. T2 und T4, denen - mit umgekehrter Durchlaßrichtung - eine sogenannte Freilaufdiode D1 und D3 bzw. D2 und D4 parallelgeschaltet ist. Es sind keine "Snubber"-Kondensatoren oder andere Entlastungsnetzwerke parallel zu den Schaltern T1...T4 vorgesehen.

Der Verbindungspunkt der Schalter T1, T3 des ersten Wechselrichterzweiges 1 bildet einen ersten Ausgangsanschluß P1, und der Verbindungspunkt der Schalter T2, T3 des zweiten Wechselrichterzweiges 2 bildet einen zweiten Ausgangsanschluß P2 des Wechselrichters. Die beiden Wechselrichterzweige sind parallel zueinander an eine Gleichspannungsquelle 4 angeschlossen. Die Ausgangsanschlüsse P1, P2 des Wechselrichters sind über die Serienschaltung eines Kondensators Cr und der Primärwicklung Np eines Transformators Tr miteinander verbunden, dessen Streuinduktivität L_{σ} ebenfalls dargestellt ist. Es handelt sich somit um einen Serienresonanz-Wechselrichter.

Die Kapazität des Kondensators Cr ist so gewählt, daß sich in Verbindung mit der Streuinduktivität L_{σ} eine Resonanzfrequenz von z.B. 20 kHz ergibt. Die Schalter T1....T4 werden durch Schaltsignale s1....s4 eines programmierbaren Pulsdauermodulators 6 so betrieben, daß zwischen den Ausgangsanschlüssen P1, P2 eine pulsdauermodulierte Rechteckspannung mit - zumindest annähernd - der Resonanzfrequenz anliegt.

Die Sekundärwicklung des Transformators Tr ist mit Ns bezeichnet. Parallel dazu ist die parasitäre Wicklungskapazität Cp wirksam. Die Sekundärwicklung ist an eine Dioden D11.....D14 und eine oder mehrere Glättungskondensatoren- bzw. Kapazitäten Cg umfassende Gleichrichteranordnung angeschlossen, an deren Ausgang eine Röntgenröhre 5 angeschlossen sind.

Insoweit, als bisher beschrieben, ist die Erfindung aus dem eingangs erwähnten Dokument bekannt.

Erfindungsgemäß ist den Wechselrichterzweigen 1, 2 ein Hilfszweig 3 parallel geschaltet, der - wie die Wechselrichterzweige 1 und 2 - ebenfalls in Serie geschaltete Schalter T5 und T6 umfaßt, denen je eine Freilaufdiode D5, D6 antiparallel geschaltet ist. Die Halbleiter in dem Hilfszweig 3 brauchen lediglich für einen kleinen Strom ausgelegt zu werden, der beispielsweise nur 10 % des Stromes beträgt, für den die Halbleiter in den Wechselrichterzweigen 1, 2 ausgelegt sein müssen. Der Hilfszweig 3 läßt sich daher wesentlich preiswerter realisieren, als die Wechselrichterzweige 1 und 2.

Der Verbindungspunkt P3 der Schalter T5, T6 im Hilfszweig 3 ist über die Serienschaltung einer Hilfsinduktivität Lh und eines Hilfskondensators Ch mit dem Ausgangsanschluß P1 des ersten Wechselrichterzweiges verbunden. Die Hilfsinduktivität Lh sollte nicht kleiner sein als die Streuinduktivität L_{σ} des Transformators Tr, vorzugsweise aber mehrfach so groß.

Einem der Schalter des Wechselrichterzweiges 1, z.B. dem Schalter T3 ist ein Dämpfungsglied parallel geschaltet, das aus der Serienschaltung eines Widerstandes Rd, einer Induktivität Ld und eines Kondensators Cd besteht. Es liegt damit wechselstrommäßig (über die Gleichspannungsquelle 4) auch dem anderen Schalter (T1) in diesem Wechselrichterzweig parallel.

Die Schaltsignale s5 und s6 für die Transistoren T5 und T6 des Hilfszweiges werden ebenfalls vom Impulsdauermodulator geliefert. Der zeitliche Verlauf der Schaltsignale s1....s6 hängt außer von der Spannung Uout an der Röntgenröhre auch von dem gewünschten Röhrenstrom I sowie davon ab, ob eine Röntgenaufnahme ausgeführt werden soll (erster Betriebsmodus) oder eine Röntgendurchleuchtung (zweiter Betriebsmodus). Der Betriebsmodus wird dem Impulsdauermodulator - z.B über die Leitung F/R signalisiert. Im ersten Betriebsmodus sind im wesentlichen nur die beiden Wechselrichterzweige 1 und 2 wirksam. Im zweiten Betriebsmodus ist der erste Wechselrichterzweig 1 deaktiviert, und es werden nur die Schalter in dem Wechselrichterzweig 2 und in dem Hilfszweig 3 geschaltet; dadurch wird die Hilfsinduktivität Lh in Serie zu dem Kondensator Cr und der Primärwicklung wirksam, wodurch die Verlustleistung in den Schaltern und im Transformator erheblich reduziert wird. Im einzelnen wird dies anhand der Figuren 2 bis 4 erläutert.

In Fig. 2a ist der für den ersten Betriebsmodus erforderliche zeitliche Verlauf der Potentiale an den Ausgangsanschlüssen P1 und P2 der Wechselrichterzweige dargestellt; der dritte Wechselrichterzweig kann - aber muß nicht - in dem ersten Betriebsmodus deaktiviert sein. Aus dem zeitlichen Versatz der Potentialverläufe von P1 und P2 resultiert zwischen den Ausgangsanschlüssen P1 und P2 die in Fig. 2b mit u₁₂ bezeichnete pulsdauermodulierte Spannung. Die Pulse werden dabei umso breiter (und die auf die Sekundärseite übertragene Leistung umso größer), je größer der zeitliche Versatz zwischen den Ausgangspotentialen P1 und P2 ist. Die auf die Sekundärseite übertragene elektrische Leistung hängt stark nichtlinear von der Impulsbreite ab. - Der zugehörige Strom i1 durch die Primärwicklung ist ebenfalls in Fig. 2b dargestellt. Man erkennt, daß dieser Verlauf nahezu sinusförmig ist und daß sich die Umladevorgänge (bei einem Sprung der Spannung u₁₂ auf einen positiven oder negativen Wert) praktisch nicht bemerkbar machen. Im ersten Betriebsmodus hat diese Schaltung daher einen guten Wirkungsgrad.

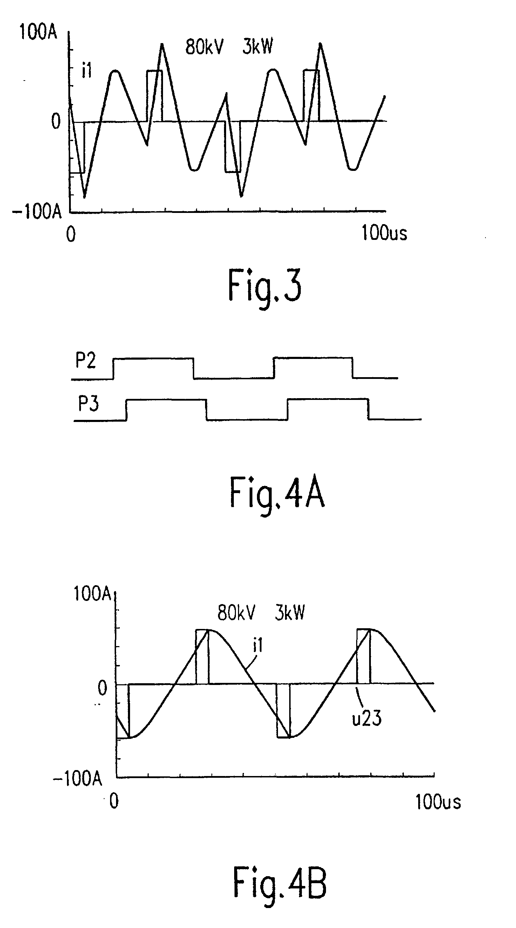

Fig. 3 zeigt den Verlauf des Stromes i1, wenn die Ausgangsleistung von dem Wert der Fig. 2b zugrundelegt (z.B. 100 kW) auf einen Wert von z.B. 3 kW reduziert wird und wenn der Versatz von P1 und P2 dementsprechend reduziert wird, ohne daß die Steuerung es Wechselrichters im übrigen geändert wird. Der in Fig. 3 dargestellte Verlauf zeigt relativ hohe Spitzen des Stroms i1, weshalb relativ starke Verluste in den Schaltern und in der Transformatorwicklung auftreten. Außerdem weicht der Stromverlauf stark von einem sinusförmigen Verlauf ab, d.h. der Strom enthält einen hohen Anteil von Oberwellen (Harmonischen), sodaß sich eine relativ starke Blindleistungskomponente ergibt. Beide Effekte führen im Dauerbetrieb dazu, daß sich der Transformatokern, die Transformatorwicklungen und die Schaltelemente des Wechselrichters so stark erwärmen, daß ein Dauerbetrieb mit dieser Einstellung bzw. einem nur die Wechselrichterzweige 1 und 2 umfassenden Wechselrichter nicht möglich ist.

Erfindungsgemäß wird über den Pulsdauermodulator 6 ein zweiter Betriebsmodus vorgegeben, bei dem der erste Wechselrichterzweig 1 deaktiviert ist (d.h. die Schalter T1 und T3 bleiben während dieses Modus gesperrt). Die Zweige 2 und 3 fungieren dann wie ein Wechselrichter, wobei jedoch zwischen den Ausgängen P3 und P2 außer der Serienschaltung des Kondensators Cr und der Primärwicklung Np noch die Hilfsinduktivität Lh (in Serie mit dem Kondensator Ch) wirksam ist. Durch die zusätzliche Hilfsinduktivität Lh wird einerseits die Amplitude des Stromes i1 und andererseits der Oberwellengehalt dieses Stromes reduziert (Fig. 4b), so daß sich ein sinusähnlicher Stromverlauf einstellt, woraus sich eine verringerte Blindleistung und verringerte Verluste in den Schaltern und in der Transformatorwicklung ergeben.

Auch wenn die Schalter T1 und T3 des ersten Wechselrichterzweiges im zweiten Betriebsmodus gesperrt sind, kann über die Freilaufdioden D1 oder D3 ein Strom fließen, wenn das Potential am Ausgangsanschluß P1 des ersten Wechselrichterzweiges positiver wird als das Potential am Pluspol bzw. negativer wird als das Potential am Minuspol der Gleichspannungsquelle 4. Ein solcher Stromfluß hat zur Folge, daß die Induktivität Lh zumindest teilweise unwirksam gemacht wird. Dies läßt sich auf verschiedene Weise verhindern:
a) Nach jedem Freilauf der Spannung zwischen P2 und P3, d.h bei jedem Spannungssprung auf einem positiven oder auf einem negativen Wert muß zuerst der zweite Wechselrichterzweig 2 umgeschaltet werden und erst danach der Hilfszweig 3. Dadurch wird ein etwaiger Strom in einer der Freilaufdioden D1 oder D3 in kürzester Zeit abgebaut.
b) Durch die Hilfskapazität Ch kann bei richtiger Auslegung der Stromfluß über die Freilaufdioden minimiert werden. Auch wenn das Produkt aus der Kapazität von Ch und der Induktivität von Lh den gleichen Wert hat oder gar kleiner ist als das Produkt von L_{σ} und der Kapazität des Kondensators Cr, bleibt die Wirkung von Lh (Reduzierung des Obewellengehaltes und der Stromamplitude) erhalten.

Da die Transistoren T1 und T3 im zweiten Betriebsmodus ständig ausgeschaltet bleiben, können sich auch deren parasitäre Kapazitäten störend bemerkbar machen. Sie können zusammen mit der Hilfsinduktivität Lh bzw. der Streuinduktivität L_{σ} einen Schwingkreis bilden, wodurch hochfrequente Schwingungen entstehen können, die unter Umständen elektromagnetische Störungen verursachen. Diese Störungen lassen sich durch das Dämpfungsglied Cd, Ld, Rd unterdrücken. Cd und Ld sind bei der zu erwartenden Störfrequenz in Resonanz, so daß diese durch Rd bedämpft wird, während andererseits der Blindwiderstand von Cd in Serie zu Ld so groß ist, daß daß Dämpfungsglied auf den Nutzspannungsverlauf am Ausgangsanschluß P1 praktisch keinen Einfluß hat.

Bei einem in der Praxis ausgeführten Röntgengenerator nach Fig. 1 konnte die im kontinuierlichen Betrieb zulässige Dauerleistung durch den Einsatz der Erfindung um etwa einen Faktor 4 vergrößert werden.

Wie bereits erwähnt, sind im ersten Betriebsmodus die Wechselrichterzweige 1 und 2 wirksam, d.h. die darin enthaltenen Schalter werden periodisch geöffnet bzw. geschlossen. Der Hilfszweig kann dabei deaktiviert sein. Vorzugsweise werden jedoch die daran enthaltenen Schalter synchron zu den Schaltern des ersten Wechselrichterzweiges geschaltet. An der Serienschaltung Lh, Ch fällt dabei keine Spannung ab, so daß auch kein Strom durch diese Elemente hindurchfließt, die sich daher nicht weiter auswirken. - Es ist aber auch möglich, so wie in Fig. 2a gestrichelt angedeutet - die Transistoren T5 und T6 des Hilfszweiges im ersten Betriebsmodus so zu schalten, daß ein nacheilender trapezförmiger Blindstrom in Lh fließt, der den Einschaltstrom des ersten Wechselrichterzweiges reduziert.

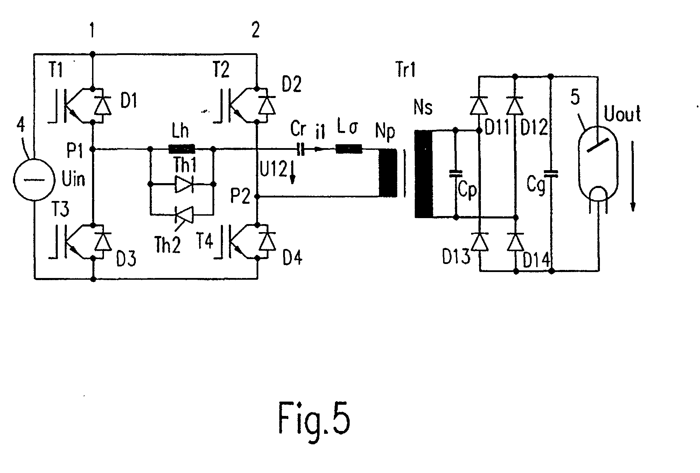

Fig. 5 zeigt eine zweite Ausführungsform der Erfindung, wobei für gleiche Bauteile wie für dieselben Bezugszeichen benutzt werden wie in Fig. 1. Einen Hilfszweig wie bei Fig. 1 gibt es dabei nicht. Stattdessen ist zwischen den Ausgangsanschlüssen P1 und P2 der Wechselrichterzweige 1 und 2 in Serie zu dem Kondensator Cr und der Primärwicklung in P eine Hilfsinduktivität Lh vorgesehen, der zwei Thyristorschalter Th1 und Th2 mit einander entgegengesetzter Durchlaßrichtung parallelgeschaltet sind.

Im ersten Betriebsmodus ist ständig einer der beiden Schalter leitend, so daß die Hilfsinduktivität Lh kurzgeschlossen wird und sich kein Wirkungsunterschied gegenüber der bekannten Schaltung der genannten Art ergibt. Im zweiten Betriebsmodus sind die Schalter Th1 und Th2 ständig gesperrt, so daß die Hilfsinduktivität Lh wirksam wird und die Amplitude und den Oberwellengehalt des Stromes I1 durch die Primärwicklung reduziert. Die Thyristorschalter Th1 bzw. Th2 müssen für den Maximalwert des Stromes I1 im ersten Betriebsmodus ausgelegt sein. Da sie aber im ersten Betriebsmodus die Hilfsinduktivität Lh ständig kurzschließen und im zweiten Betriebsmodus ständig unwirksam sind, könnten sie auch durch einen mechanischen Schalter ersetzt werden, der im ersten Betriebsmodus geöffnet und im zweiten Betriebsmodus geschlossen wird und der beim Übergang von Röntgenaufnahme auf Röntgendurchleuchtung umgeschaltet wird.

Vorstehend wurde die Erfindung in Verbindung mit einem Röntgengenrator erläutert, bei dem die Leistung von einem Wechselrichter in die Primärwicklung eines Hochspannungstransformators eingespeist wird. Die Erfindung ist jedoch auch anwendbar, wenn die Leistung von zwei (oder mehreren) Wechselrichtern in je eine Primärwicklung eines gemeinsamen Hochspannungstransformators eingespeist wird, wie in der US Appln No 08/568,064 (PHD 94-162) beschrieben.

Vorstehend erfolgte die Erläuterung der Erfindung in Verbindung mit einem Wechselrichter, dessen Leistung (bei konstanter Frequenz) durch Pulsdauermodulation gesteuert wird; die Erfindung ist aber auch bei einem Wechselrichter anwendbar, dessen Leistung durch eine Frequenzänderung gesteuert wird. Außerdem wurde die Erfindung an einem Serienresonanz-Wechselrichter (Primärwicklung und Kondensator in Serie) erläutert; sie ist aber auch bei anderen Resonanz-Topologien anwendbar, z.B bei einem Parallelresonanz-Wechselrichter.

## Patentansprüche

1. Leistungsversorgungseinheit, die in einem ersten Betriebsmodus eine hohe Kurzzeit-Leistung und in einem zweiten Betriebsmodus eine niedrigere Dauerleistung erzeugt, mit einem eingangsseitig an eine Gleichspannungsquelle (4) angeschlossenen Wechselrichter (1, 2), an dessen Ausgang zusammen mit einem Kondensator (Cr) eine Primärwicklung (Np) eines Transformators (Tr) angeschlossen ist, von dem eine Sekundärwicklung (Ns) mit einer Gleichrichteranordnung (D11....D14) gekoppelt ist,
**dadurch gekennzeichnet, daß** Mittel zum Umschalten zwischen dem ersten Betriebsmodus und dem zweiten Betriebsmodus vorgesehen sind, wobei am Ausgang des Wechselrichters im ersten Betriebsmodus eine Serienschaltung aus der Primärwicklung (Np) und dem Kondensator (Cr) und im zweiten Betriebsmodus eine Serienschaltung wirksam ist, die in Serie zu der Primärwicklung und dem Kondensator eine Induktivität (Lh) umfaßt.

2. Leistungssversorgungseinheit nach Anspruch 1,
**dadurch gekennzeichnet, daß** die Mittel zum Umschalten eine der Induktivität parallelgeschaltete Schalteranordnung (Th1, Th2) umfassen.

3. Leistungsversorgungseinheit nach Anspruch 1,
**dadurch gekennzeichnet, daß** der Wechselrichter parallel zueinander einen ersten und einen zweiten Wechselrichterzweig (1,2) umfaßt, die je zwei in Serie geschaltete Schalter enthalten (T1,T3 bzw T2, T4), deren Verbindungspunkte einen ersten bzw. zweiten Ausgangsanschluß (P1, P2) des Wechselrichters bilden, daß die Mittel zum Umschalten parallel zu dem ersten bzw. dem zweiten Wechselrichterzweig (1 bzw. 2) einen Hilfszweig enthalten, der zwei in Serie geschaltete Hilfsschalter (T5, T6) enthält, daß die Induktivität (Lh) in einem Zweig zwischen dem zweiten Ausgangsanschluß (P2) und dem Verbindungspunkt (P3) der beiden Hilfsschalter enthalten ist, daß eine Steuerschaltung (6) zur Steuerung der Schalter in den Wechselrichterzweigen (1, 2) und in dem Hilfszweig (3) vorgesehen ist, die so ausgebildet ist, daß im zweiten Betriebsmodus der erste Wechselrichterzweig (1) deaktiviert und der Hilfszweig (3) aktiviert ist.

4. Leistungsversorgungseinheit nach Anspruch 3,
**dadurch gekennzeichnet, daß** der Ausgangsanschluß des ersten Wechselrichterzweiges (1) mit dem Verbindungspunkt (P3) der beiden Hilfsschalter über die Induktivität (Lh) und einen dazu in Serie geschalteten weiteren Kondensator (Cr) verbunden ist.

5. Leistungsversorgungseinheit nach Anspruch 3,
**dadurch gekennzeichnet, daß** die Steuerschaltung (6) so ausgebildet ist, daß im zweiten Betriebsmodus die Vorderflanken der Spannungsimpulse an der Serienschaltung durch Schließen jeweils eines der Schalter (T2, T4) des zweiten Wechselrichterzweiges entstehen.

6. Leistungsversorgungseinheit nach Anspruch 3,
**dadurch gekennzeichnet, daß** einem der Schalter (T3) des ersten Wechselrichterzweiges (1) ein Dämpfungsglied (Cd, Ld, Rd) parallelgeschaltet ist.

7. Leistungsversorgungseinheit nach Anspruch 3,
**dadurch gekennzeichnet, daß** die Steuerschaltung (6) so ausgebildet ist, daß im ersten Betriebsmodus die Schalter (T5, T6) des Hilfszweiges (3) gleichzeitig mit den Schaltern (T1, T3) des ersten Wechselrichterzweiges (1) geschaltet werden.

8. Leistungsversorgungseinheit nach Anspruch 3,
**dadurch gekennzeichnet, daß** die Steuerschaltung so ausgebildet ist, daß im ersten Betriebsmodus die Schalter des Hilfszweiges (3) synchron, aber nacheilend mit den Schaltern (T1, T3) des ersten Wechselrichterzweiges (1) geschaltet werden.

9. Leistungsversorgungseinheit nach Anspruch 1,
**gekennzeichnet durch** ihre Anwendung in einem Röntgengenerator zur Speisung einer Röntgenröhre (5).

10. Röntgensystem mit einem Röntgengenerator nach Anspruch 8.

## Claims

1. A power supply unit which generates a high short-time power in a first mode of operation and a lower continuous power in a second mode of operation, includes an inverter (1, 2) which is connected to a DC voltage source (4) at the input side and to the output of which there is connected, together with a capacitor (Cr), a primary winding (Np) of a transformer (Tr), a secondary winding (Ns) of which is coupled to a rectifier arrangement (D11 ... D14), **characterized in that** there are provided means for switching over between the first mode of operation and the second mode of operation, a series connection of the primary winding (Np) and the capacitor (Cr) acting on the output of the inverter in the first mode of operation whereas in the second mode of operation this output is subject to a series connection which includes an inductance (Lh) in series with the primary winding and the capacitor.

2. A power supply unit as claimed in Claim 1, **characterized in that** the means for switching over include a switch arrangement (Th1, Th2) connected parallel to the inductance.

3. A power supply unit as claimed in Claim 1, **characterized in that** the inverter includes a first and a second inverter branch (1, 2) which are connected in parallel and each of which includes two series-connected switches (T1, T3 and T2, T4) whose connection points constitute a first and a second output connection (P1, P2) of the inverter, respectively, that the means for switching over include, connected parallel to the first and the second inverter branch (1, 2), an auxiliary branch which includes two series-connected auxiliary switches (T5, T6), that the inductance (Lh) is included in a branch between the second output connection (P2) and the connection point (P3) of the two auxiliary switches, and that there is provided a control circuit (6) for controlling the switches in the inverter branches (1, 2) and in the auxiliary branch (3), said control circuit being constructed in such a manner that in the second mode of operation the first inverter branch (1) is deactivated and the auxiliary branch (3) is activated.

4. A power supply unit as claimed in Claim 3, **characterized in that** the output connection of the first inverter branch (1) is connected to the connection point (P3) of the two auxiliary switches, via the inductance (Lh) and a further capacitor (Cr) which is connected in series therewith.

5. A power supply unit as claimed in Claim 3, **characterized in that** the control circuit (6) is constructed in such a manner that in the second mode of operation the leading edges of the voltage pulses in the series connection are produced by the closing of each time one of the switches (T2, T4) of the second inverter branch.

6. A power supply unit as claimed in Claim 3, **characterized in that** a snubber circuit (Cd, Ld, Rd) is connected parallel to one of the switches (T3) of the first inverter branch (1).

7. A power supply unit as claimed in Claim 3, **characterized in that** the control circuit (6) is constructed in such a manner that in the first mode of operation the switches (T5, T6) of the auxiliary branch (3) are switched simultaneously with the switches (T1, T3) of the first inverter branch (1).

8. A power supply unit as claimed in Claim 3, **characterized in that** the control circuit is constructed in such a manner that in the first mode of operation the switches of the auxiliary branch (3) are switched in synchronism but delayed with respect to the switches (T1, T3) of the first inverter branch (1).

9. A power supply unit as claimed in Claim 1, **characterized in that** it is used in an X-ray generator for feeding an X-ray tube (5).

10. An X-ray system which includes an X-ray generator as claimed in Claim 9.

## Revendications

1. Unité d'alimentation de puissance qui produit, dans un premier mode de fonctionnement, une puissance instantanée élevée et, dans un deuxième mode de fonctionnement, une puissance continue inférieure avec un onduleur (1, 2) raccordé côté entrée à une source de tension continue (4) à la sortie de laquelle est couplé, avec un condensateur (Cr), un enroulement primaire (Np) d'un transformateur (Tr) par lequel un enroulement secondaire (Ns) est couplé avec un dispositif redresseur (D11...D14),
**caractérisée en ce que** des moyens de commutation entre le premier mode de fonctionnement et le deuxième mode de fonctionnement sont prévus, un montage en série de l'enroulement primaire (Np) et du condensateur (Cr) étant actif à la sortie de l'onduleur dans le premier mode de fonctionnement et un montage en série qui comprend une inductance Lh en série avec l'enroulement primaire et le condensateur étant actif dans le deuxième mode de fonctionnement.

2. Unité d'alimentation de puissance selon la revendication 1,
**caractérisée en ce que** les moyens de commutation comprennent un dispositif à commutateurs (Th1, Th2) monté en parallèle avec l'inductance.

3. Unité d'alimentation de puissance selon la revendication 1,
**caractérisée en ce que** l'onduleur comprend en parallèle une première et une deuxième branches d'onduleur (1, 2) qui contiennent respectivement deux commutateurs montés en série (T1, T3 ou T2, T4) dont les points de jonction forment une première ou une deuxième borne de sortie (P1, P2) de l'onduleur, que les moyens de commutation contiennent parallèlement aux première ou deuxième branches d'onduleur (1, 2) une branche auxiliaire qui contient deux commutateurs auxiliaires (T5, T6) montés en série, que l'inductance (Lh) est contenue dans une branche entre la deuxième borne de sortie (P2) et le point de jonction (P3) des deux commutateurs auxiliaires, qu'un circuit de commande (6) est prévu pour la commande des commutateurs dans les branches de l'onduleur (1, 2) et dans la branche auxiliaire (3) qui est conçue de telle sorte que la première branche d'onduleur (1) est désactivée et la branche auxiliaire (3) est activée dans le deuxième mode de fonctionnement.

4. Unité d'alimentation de puissance selon la revendication 3,
**caractérisée en ce que** la borne de sortie de la première branche de l'onduleur (1) est reliée au point de jonction (P3) des deux commutateurs auxiliaires par l'intermédiaire de l'inductance (Lh) et un condensateur supplémentaire (Cr) monté en série avec celle-ci.

5. Unité d'alimentation de puissance selon la revendication 3,
**caractérisée en ce que** le circuit de commande (6) est conçu de telle sorte que les flancs d'attaque des impulsions de tension sur le montage en série se forment par fermeture respective d'un des commutateurs (T2, T4) de la deuxième branche de l'onduleur dans le deuxième mode de fonctionnement.

6. Unité d'alimentation de puissance selon la revendication 3,
**caractérisée en ce qu'**un organe d'atténuation (Cd, Ld, Nd) est monté en parallèle d'un des commutateurs (T3) de la première branche de l'onduleur (1).

7. Unité d'alimentation de puissance selon la revendication 3,
**caractérisée en ce que** le circuit de commande (6) est conçu de telle sorte que les commutateurs (T5, T6) de la branche auxiliaire (3) sont montés simultanément avec les commutateurs (T1, T3) de la première branche de l'onduleur (1) dans le premier mode de fonctionnement.

8. Unité d'alimentation de puissance selon la revendication 3,
**caractérisée en ce que** le circuit de commande est conçu de telle sorte que les commutateurs de la branche auxiliaire (3) soient montés de manière synchrone mais en retard avec les commutateurs (T1, T3) de la première branche de l'onduleur (1) dans le premier mode de fonctionnement.

9. Unité d'alimentation de puissance selon la revendication 1,
**caractérisée par** son application dans un générateur de rayons X pour l'alimentation d'un tube à rayons X (5).

10. Système à rayons X avec un générateur de rayons X selon la revendication 8.
